# FASCICULE DE BREVET EUROPEEN

(11) **EP 2 608 454 B1**
(45) Date de publication et mention de la délivrance du brevet: **07.02.2018**
(21) Numéro de dépôt: 12195750.0
(22) Date de dépôt: 05.12.2012
(51) Int. Cl.: H04L 12/24, H04W 4/00, H04W 84/12, H04L 12/28, H04L 29/08

(54) **PROCÉDÉ DE DÉCLENCHEMENT D'UNE FONCTION EXÉCUTABLE PAR UNE PASSERELLE, PRODUIT PROGRAMME D'ORDINATEUR, MÉDIUM DE STOCKAGE ET SYSTÈME CORRESPONDANTS**
METHOD FOR TRIGGERING A FUNCTION THAT CAN BE EXECUTED BY A GATEWAY, CORRESPONDING COMPUTER PROGRAM PRODUCT, STORAGE MEDIUM AND SYSTEM
AUSLÖSEVERFAHREN EINER DURCH EINE SCHNITTSTELLE AUSFÜHRBAREN FUNKTION, SOWIE ENTSPRECHENDES COMPUTERPROGRAMMPRODUKT, SPEICHERMEDIUM UND SYSTEM

(30) Priorité: 21.12.2011 FR 1162171
(43) Date de publication de la demande: 26.06.2013
(73) Titulaire: Orange, 75015 Paris (FR)
(72) Inventeur: Guignon, Richard, 35150 Amanlis (FR); Guegan, Delphine, 35830 Betton (FR); Baranski, Fabrice, 35000 Rennes (FR); Jumpertz, Sylvie, 35000 Rennes (FR)
(74) Mandataire: Vidon Brevets & Stratégie

(56) Documents cités:
- EP-A1- 1 850 527
- US-A1- 2005 159 823

## Description

### 1. DOMAINE DE L'INVENTION

Le domaine de l'invention est celui des passerelles, et notamment mais non exclusivement des passerelles domestiques (aussi appelées passerelles résidentielles, ou encore « home gateways » ou « box » en anglais).

Une passerelle domestique est un équipement terminal de réseau qui, en assurant la fonction de modem, sert d'interface pour l'interconnexion d'un réseau local d'un utilisateur avec le réseau Internet, via le réseau d'un opérateur fournisseur d'accès au réseau Internet. Elle assure également la fonction de routeur, permettant à des terminaux clients, connectés au réseau local (typiquement un réseau local filaire de type Ethernet), d'accéder au réseau Internet. Elle est connectée au réseau de l'opérateur par une connexion de type ADSL, câble, fibre optique, etc.

Une passerelle domestique est plus qu'un simple modem/routeur car elle permet aussi à l'opérateur qui la distribue de proposer des services annexes à l'accès à Internet et utilisant le réseau de l'opérateur (comme un service de télévision sur IP ou un service de téléphonie sur IP).

Certaines passerelles domestiques peuvent aussi servir de routeur avec un ou plusieurs réseaux locaux sans fil (ou WLAN, pour « Wireless Local Area Network » en anglais), par exemple en intégrant la fonction de point d'accès WiFi, et/ou de routeur avec un réseau CPL (pour « courants porteurs en ligne »), ce qui permet de partager une connexion Internet entre plusieurs terminaux clients (ordinateurs par exemple) à travers ces réseaux locaux supplémentaires (WLAN, CPL).

Plus précisément, l'invention concerne une technique de déclenchement d'une fonction exécutable par une passerelle.

L'invention s'applique notamment, mais non exclusivement, au déclenchement d'une fonction d'activation ou de désactivation d'un module (par exemple un module WiFi comprenant une interface d'accès à au moins un réseau local sans fil de type WiFi) d'une passerelle domestique.

### 2. ARRIÈRE-PLAN TECHNOLOGIQUE

On s'attache plus particulièrement dans la suite de ce document à décrire la problématique existant dans le cas particulier du déclenchement d'une fonction d'activation/désactivation du module WiFi d'une passerelle domestique, à laquelle ont été confrontés les inventeurs de la présente demande de brevet. L'invention ne se limite bien sûr pas à ce cas particulier, mais présente un intérêt dans tous les cas où l'on souhaite déclencher une fonction exécutable par une passerelle, comme par exemple une fonction liée à un service de téléphonie (fonction de renvoi d'appel par exemple), une fonction liée à un service de télévision, etc.

Actuellement les passerelles domestiques sont de plus en plus répandues chez les particuliers et la connexion WiFi de ces passerelles domestiques est largement utilisée. Cependant, le grand public est particulièrement sensible au principe de précaution préconisant de minimiser les expositions aux ondes. Les passerelles domestiques ont des fonctions avancées pour la gestion du WiFi permettant de activer ou de stopper la fonction WiFi, sans arrêter les autres fonctions et services dispensés par la passerelle domestique (voix sur IP, Internet, TV...).

L'activation et la désactivation de la fonction WiFi peuvent actuellement être effectuées de plusieurs façons; toutefois aucune de ces solutions n'est totalement satisfaisante :
- activation/désactivation par utilisation d'un interrupteur placé sur le boîtier de la passerelle domestique. Cependant les passerelles domestiques ne sont pas toujours accessibles (dans le garage, derrière un meuble ...);
- activation/désactivation par une première interface d'administration de la passerelle domestique, localisée dans la passerelle domestique et donc accessible via le réseau local (réseau domestique) depuis un ordinateur ou un téléphone mobile (si la fonction WiFi est activée). Cependant, lorsque la fonction WiFi est désactivée, l'utilisateur est obligé d'utiliser un terminal relié en filaire (par exemple Ethernet) à la passerelle domestique pour l'activer. De plus, que la fonction WiFi soit activée ou désactivée, l'utilisateur est obligé d'accéder à la première interface d'administration, de s'authentifier puis de modifier la configuration de la fonction WiFi;
- activation/désactivation par une deuxième interface d'administration de la passerelle domestique, localisée dans le réseau de l'opérateur et donc accessible via Internet depuis un ordinateur ou un téléphone mobile. Cependant, l'utilisateur est obligé d'accéder à la deuxième interface d'administration, de s'authentifier puis de modifier la configuration de la fonction WiFi;
- activation/désactivation par programmation de plages horaires d'extinction (désactivation) de la fonction WiFi. Par manque de flexibilité, ceci peut provoquer des déconnexions et activations non désirées de la fonction WiFi.

On constate donc qu'avec ces solutions connues, la gestion de la fonction WiFi des passerelles domestiques ne peut pas se faire facilement, en particulier l'activation depuis un terminal sans fil.

Le document EP 1 850 527 A1 divulgue l'objet tel que présenté dans le préambule des revendications 1 et 14.

### 3. EXPOSÉ DE L'INVENTION

L'invention est définie par les revendications 1, 12, 13 et 14. Des modes de réalisations sont définis par les revendications 2 à 11. L' invention repose sur une approche tout à fait nouvelle et inventive consistant à utiliser la technologie des radio-étiquettes (aussi appelées marqueurs ou transpondeurs) pour faciliter le déclenchement d'une fonction exécutable par la passerelle. En effet, par un simple geste de l'utilisateur avec son terminal de radiocommunication (par exemple un téléphone mobile), à savoir le positionnement de ce terminal à proximité d'une radio-étiquette, l'utilisateur déclenche un mécanisme qui aboutit au déclenchement de la fonction par la passerelle (comme détaillé ci-après, la fonction ainsi déclenchée permet par exemple d'obtenir une nouvelle configuration de la passerelle, suite à l'activation ou à la désactivation d'un module de la passerelle ou bien à un changement de paramètres de configuration). La fonction peut donc être une fonction d'activation ou de désactivation d'un module de la passerelle, ou plus généralement, une fonction de configuration de cette passerelle. L'invention est applicable en outre à toute fonction de mise en oeuvre d'un service.

L'utilisateur a par exemple préalablement disposé plusieurs radio-étiquettes à différents endroits de son domicile, et le procédé de l'invention peut être mis en oeuvre avec l'une quelconque de ces radio-étiquettes.

Ces radio-étiquettes sont par exemple conformes à la technologie sans contact RFID, pour « Radio Frequency IDentification » en anglais, ou à la technologie sans contact NFC, pour « Near field communication » en anglais. Pour des questions de coût et d'autonomie, ce sont de préférence (mais non impérativement) des radio-étiquettes passives.

Selon un aspect particulier de l'invention, l'étape de transmission de la requête de déclenchement est effectuée seulement si le terminal de radiocommunication reçoit préalablement, via une première interface homme/machine manipulée par un utilisateur, un signal de validation.

Ainsi, on évite un déclenchement non souhaité par l'utilisateur de la fonction.

Selon une caractéristique particulière, l'étape de transmission de la requête de déclenchement par le terminal de radiocommunication est précédée des étapes suivantes :
- le terminal de radiocommunication transmet au dispositif de configuration une requête de statut de la fonction;
- le dispositif de configuration propage la requête de statut jusqu'à la passerelle;
- la passerelle transmet au dispositif de configuration une information de statut, relative au statut de la fonction;
- le dispositif de configuration propage l'information de statut jusqu'au terminal de radiocommunication ;
- le terminal de radiocommunication restitue l'information de statut audit utilisateur.

Cette caractéristique est particulièrement intéressante dans le cas où plusieurs utilisateurs sont autorisés à déclencher la fonction et où chaque utilisateur ne sait pas forcément ce qu'ont fait les autres utilisateurs. Elle peut être combinée avec la caractéristique précédente (validation par l'utilisateur), afin d'améliorer la prise de décision (validation ou non) de l'utilisateur.

Selon une variante, l'étape de transmission de la requête de déclenchement est effectuée automatiquement après réception par le terminal de radiocommunication de l'information d'étiquette.

Dans cette variante, l'action de l'utilisateur est limitée au placement de son terminal à proximité de la radio-étiquette.

Selon une caractéristique particulière, l'étape de déclenchement de la fonction par la passerelle est suivie des étapes suivantes :
- la passerelle transmet au dispositif de configuration une information de statut, relative au statut de la fonction;
- le dispositif de configuration propage l'information de statut jusqu'au terminal de radiocommunication ;
- le terminal de radiocommunication restitue l'information de statut audit utilisateur, via une deuxième interface homme/machine.

Ainsi, l'utilisateur peut déclencher à nouveau la fonction (en plaçant à nouveau son terminal à proximité de la radio-étiquette) si la configuration courante (qui lui est indiquée par l'information de statut) ne lui convient pas.

Selon une caractéristique particulière, la fonction est une fonction d'activation ou de désactivation d'au moins un module de la passerelle.

Selon une caractéristique particulière, ladite information de statut indique si le module est activé ou désactivé.

Selon une caractéristique particulière, ledit au moins un module comprend une interface d'accès à un réseau local géré par la passerelle. L'information d'étiquette comprend un identifiant d'au moins un réseau local géré par la passerelle. La requête de déclenchement comprend ou est transmise avec ledit identifiant. La passerelle déclenche la fonction d'activation ou de désactivation de l'interface d'accès au réseau local identifié par ledit identifiant.

Ainsi, on peut déclencher la fonction de manière distincte pour chacun des réseaux locaux sans fil (réseaux WiFi par exemple) gérés par la passerelle. De manière connue, chaque réseau Wifi est par exemple caractérisé par un identifiant SSID (pour « Service Set Identifier »).

Selon une caractéristique particulière, l'identifiant du terminal de radiocommunication est transmis avec la requête de déclenchement. L'étape de propagation de la requête de déclenchement par le dispositif de configuration est précédée de l'étape suivante : le dispositif de configuration vérifie que l'identifiant du terminal de radiocommunication fait partie d'une liste prédéterminée d'identifiants autorisés. L'étape de propagation de la requête de déclenchement par le dispositif de configuration est effectuée seulement si l'identifiant du terminal de radiocommunication est un identifiant autorisé.

Ainsi, on sécurise l'accès au déclenchement de la fonction, en limitant cet accès à une liste prédéterminée de un ou plusieurs terminaux de radiocommunication.

Selon une caractéristique particulière, l'information d'étiquette est transmise avec la requête de déclenchement. L'étape de propagation de la requête de déclenchement par le dispositif de configuration est précédée de l'étape suivante : le dispositif de configuration vérifie que l'information d'étiquette fait partie d'une liste prédéterminée d'informations autorisées. L'étape de propagation de la requête de déclenchement par le dispositif de configuration est effectuée seulement si l'information d'étiquette est une information autorisée.

Ainsi, on sécurise l'accès au déclenchement de la fonction, en interdisant cet accès à un terminal de radiocommunication n'ayant pas été placé à proximité d'une radio-étiquette autorisée (et n'ayant donc pas reçue de cette dernière une information autorisée).

Selon une caractéristique particulière, la fonction appartient au groupe comprenant :
- une fonction de point d'accès à au moins un réseau local sans fil, - une fonction liée à un service de téléphonie; et
- une fonction liée à un service de télévision.

Cette liste n'est pas exhaustive.

Avantageusement, le système comprend des moyens de mise en oeuvre des étapes du procédé tel que décrit précédemment, dans l'un quelconque de ses différents modes de réalisation.

### 4. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1 présente un synoptique d'un système selon un mode de réalisation particulier de l'invention ;
- la figure 2 présente un diagramme de séquence d'un mode de réalisation particulier du procédé selon l'invention, mis en oeuvre par le système de la figure 1; et et
- la figure 3 présente la structure d'un dispositif générique intégré, dans un mode de réalisation particulier de l'invention, aux entités suivantes des figures 1 et 2 : le terminal de radiocommunication, le dispositif de configuration et la passerelle domestique.

### 5. DESCRIPTION DÉTAILLÉE

Sur toutes les figures du présent document, les éléments identiques sont désignés par une même référence numérique.

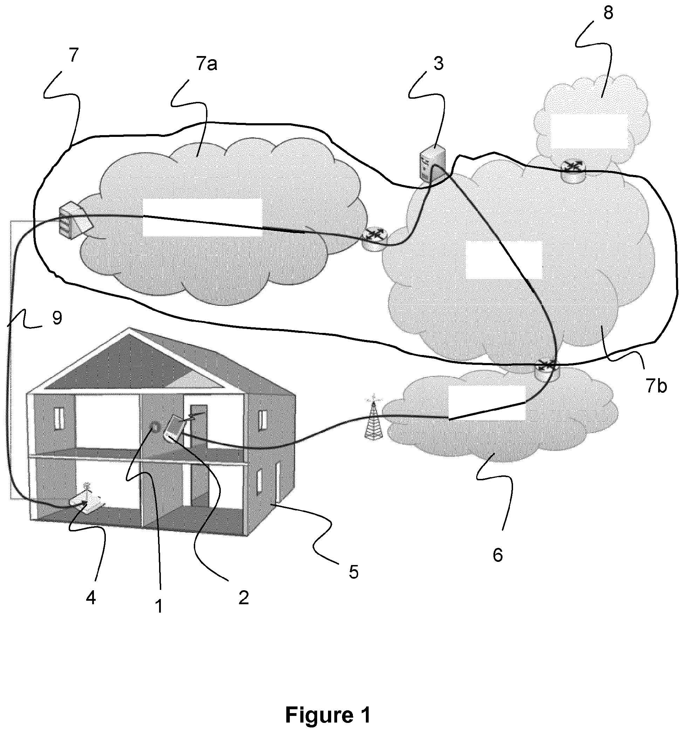

On décrit maintenant, en relation avec le synoptique de la **figure** 1, un mode de réalisation particulier du système selon l'invention, comprenant une radio-étiquette 1, un terminal de radiocommunication 2, un dispositif de configuration 3 et une passerelle domestique 4.

La passerelle domestique 4 sert d'interface pour l'interconnexion d'un ou plusieurs réseaux locaux d'un utilisateur avec le réseau Internet 8, via un réseau d'opérateur 7 (c'est-à-dire le réseau d'un opérateur fournisseur d'accès au réseau Internet). Le réseau d'opérateur 7 comprend un réseau de collecte 7a et un réseau fédérateur (« backbone network » en anglais). La connexion entre la passerelle domestique 4 et le réseau d'opérateur 7 est typiquement de type ADSL, câble, fibre optique, etc.

A titre d'exemple, on suppose que la passerelle domestique 4 sert de routeur avec un réseau local filaire de type Ethernet et deux réseaux locaux sans fil (WLAN) de type WiFi. La passerelle domestique 4 intègre donc la fonction de point d'accès WiFi et on considère dans la suite de la description le cas où la fonction à déclencher est une fonction d'activation/désactivation d'un module WiFi de la passerelle domestique (c'est-à-dire un module mettant en oeuvre la fonction de point d'accès WiFi pour l'un des deux réseaux WiFi).

Il est clair cependant que de nombreuses autres applications de l'invention peuvent être envisagées. On peut notamment prévoir que la fonction à déclencher soit une fonction liée à un service de téléphonie ou une fonction liée à un service de télévision, si la passerelle domestique 4 propose ces services annexes à l'accès à Internet.

La radio-étiquette 1 est par exemple une radio-étiquette passive compatible avec la technologie sans contact RFID. En pratique, l'utilisateur a par exemple préalablement disposé plusieurs radio-étiquettes à différents endroits de son domicile 5 (entrée, table de chevet, salon...) ou éventuellement à l'extérieur de chez lui (voiture, bureau ...), et le mécanisme de déclenchement décrit ci-après peut être mis en oeuvre avec l'une quelconque de ces radio-étiquettes.

Le terminal de radiocommunication 2 est par exemple un téléphone mobile conforme à une technologie permettant de transmettre des données (telle que GPRS (« Global Packet Radio Service »), EDGE (« Enhanced Data Rate for GSM Evolution »), UMTS (« Universal Mobile Télécommunications System »), etc), via un réseau de radiocommunication 6.

Le terminal de radiocommunication 2 est également conforme, dans cet exemple, avec la technologie sans contact RFID, afin de pouvoir communiquer via une liaison radio avec la radio-étiquette 1.

Le dispositif de configuration 3 est par exemple un serveur mis en oeuvre par l'opérateur et accessible via le réseau d'opérateur 7. Dans l'exemple précité, ce dispositif de configuration 3 gère un service de configuration (déclenchement de la fonction d'activation/désactivation) d'un module WiFi de la passerelle domestique 4. En pratique, il peut gérer un service de configuration (déclenchement) d'une pluralité de fonctions d'une pluralité de passerelles domestiques.

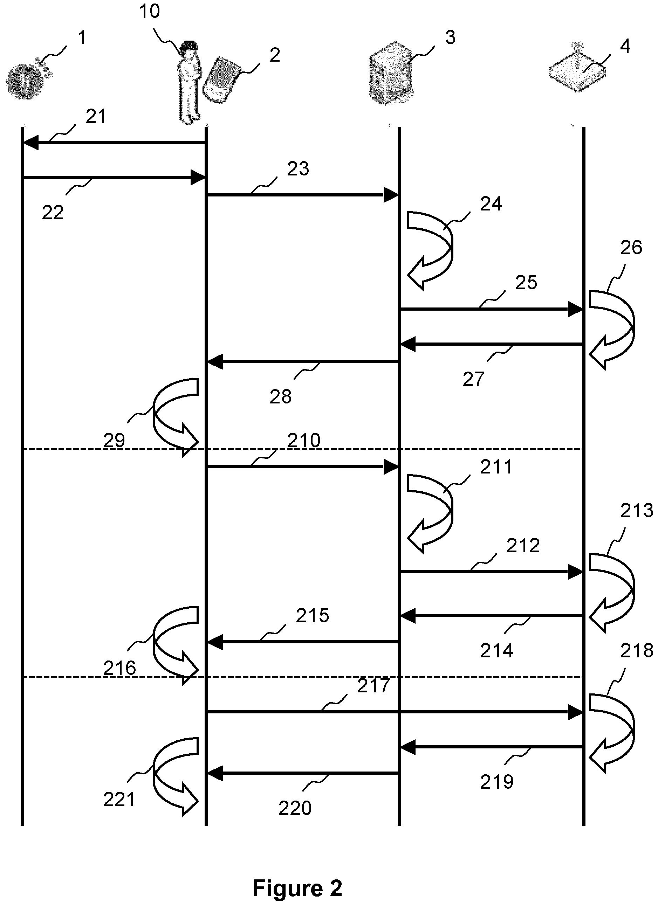

On décrit maintenant, en relation avec le diagramme de séquence de la **figure** 2, un mode de réalisation particulier du procédé selon l'invention, mis en oeuvre par le système de la figure 1.

On retrouve les entités suivantes du système : la radio-étiquette 1, le terminal de radiocommunication 2, le dispositif de configuration 3 et la passerelle domestique 4. On a également représenté l'utilisateur, référencé 10.

Dans une étape 21, lorsque l'utilisateur 10 place son terminal de radiocommunication 2 à proximité de la radio-étiquette 1, le terminal de radiocommunication transmet, via une liaison radio NFC, un signal de réveil à la radio-étiquette 1.

En retour, dans une étape 22, la radio-étiquette 1 transmet, via la liaison radio NFC, une information d'étiquette au terminal de radiocommunication 2. Cette information d'étiquette sert à identifier la fonction à déclencher et comprend, dans le présent exemple, l'identifiant SSID d'un des deux réseaux WiFi gérés par la passerelle domestique 4.

Dans une étape 23, le terminal de radiocommunication 2 transmet au dispositif de configuration 3, via le réseau de radiocommunication 6 et le réseau d'opérateur 7, une requête de statut de la fonction (dans le présent exemple, le statut de la fonction correspond au statut (état activé ou état désactivé) du module WiFi de la passerelle domestique 4), accompagnée de l'identifiant SSID du réseau WiFi concerné par cette requête.

Dans une étape 24, le dispositif de configuration 3 vérifie un ou plusieurs critères. Il vérifie par exemple que l'identifiant SSID (du réseau WiFi concerné par la requête de statut) fait partie d'une liste prédéterminée d'identifiants SSID autorisés (liste préalablement renseignée par l'utilisateur). Il peut également vérifier qu'un identifiant du terminal de radiocommunication 2, transmis avec la requête de statut, fait partie d'une liste prédéterminée d'identifiants de terminaux autorisés (liste préalablement renseignée par l'utilisateur). Si le ou les critères sont vérifiés, le dispositif de configuration 3 passe à l'étape 25 ; sinon, la procédure de configuration est interrompue.

Dans l'étape 25, le dispositif de configuration 3 propage, via le réseau d'opérateur 7, la requête de statut jusqu'à la passerelle domestique 4.

Dans une étape 26, la passerelle domestique 4 obtient l'information de statut, par exemple en consultant une table stockant un état courant (état activé ou état désactivé) pour chacun des réseaux WiFi gérés par la passerelle domestique.

Dans une étape 27, la passerelle domestique 4 transmet l'information de statut au dispositif de configuration 3.

Dans une étape 28, le dispositif de configuration 3 retransmet l'information de statut au terminal de radiocommunication 2.

Dans une étape 29, le terminal de radiocommunication 2 restitue (par exemple en l'affichant sur son écran) l'information de statut à l'utilisateur 10. Via une interface homme/machine, l'utilisateur 10 indique au terminal de radiocommunication 2 s'il souhaite ou non continuer la procédure de déclenchement de la fonction (et donc de configuration de l'état du module WiFi). Dans l'affirmative, le terminal de radiocommunication 2 reçoit un signal de validation via l'interface homme/machine et passe à l'étape 210. Dans la négative, la procédure de configuration est interrompue.

Dans l'étape 210, le terminal de radiocommunication 2 transmet au dispositif de configuration 3, via le réseau de radiocommunication 6 et le réseau d'opérateur 7, une requête de basculement, c'est-à-dire une requête de passage du module WiFi de la passerelle domestique 4, d'un état activé à un état désactivé (ou inversement, en fonction de l'état courant). Avec cette requête de basculement est également transmis l'identifiant SSID du réseau WiFi concerné par cette requête. Cette requête de basculement est donc équivalente à une requête de déclenchement d'une fonction d'activation du module WiFi, si ce dernier est dans état désactivé, ou à une requête de déclenchement d'une fonction de désactivation du module WiFi, si ce dernier est dans état activé.

Dans une étape 211, le dispositif de configuration 3 vérifie un ou plusieurs critères. Il vérifie par exemple que l'identifiant SSID (du réseau WiFi concerné par la requête de basculement) fait partie d'une liste prédéterminée d'identifiants SSID autorisés (liste préalablement renseignée par l'utilisateur). Il peut également vérifier qu'un identifiant du terminal de radiocommunication 2, transmis avec la requête de statut, fait partie d'une liste prédéterminée d'identifiants de terminaux autorisés (liste préalablement renseignée par l'utilisateur). Si le ou les critères sont vérifiés, le dispositif de configuration 3 passe à l'étape 212; sinon, la procédure de configuration est interrompue.

Dans l'étape 212, le dispositif de configuration 3 propage, via le réseau d'opérateur 7, la requête de basculement et l'identifiant SSID jusqu'à la passerelle domestique 4.

Dans une étape 213, la passerelle domestique 4 effectue le basculement pour le réseau WiFi concerné (c'est-à-dire active le module WiFi pour le réseau WiFi concerné, si ce module était auparavant désactivé pour le réseau WiFi concerné, ou, inversement, désactive le module WiFi pour le réseau WiFi concerné, si ce module était auparavant activé). La passerelle domestique 4 modifie l'information de statut dans la table précitée (stockage d'un état courant du module WiFi pour chacun des réseaux WiFi gérés par la passerelle domestique).

Dans une étape 214, la passerelle domestique 4 transmet l'information de statut au dispositif de configuration 3.

Dans une étape 215, le dispositif de configuration 3 retransmet l'information de statut au terminal de radiocommunication 2.

Dans une étape 216, le terminal de radiocommunication 2 restitue (par exemple en l'affichant sur son écran) l'information de statut à l'utilisateur 10.

Sur la figure 1, la flèche référencée 9 illustre le chemin suivi par la requête de statut (cf étapes 23 et 25 ci-dessus) ou bien la requête de basculement (cf étapes 210 et 212 ci-dessus), entre le terminal de radiocommunication 2 et la passerelle domestique 4.

De nombreuses variantes peuvent être envisagées sans sortir du cadre de la présente invention.

Dans une première variante de réalisation, les étapes 23 à 29 sont omises, et l'étape 210 de transmission de la requête de basculement est effectuée automatiquement après réception par le terminal de radiocommunication 2 de l'information d'étiquette (comprenant, dans l'exemple précité, l'identifiant SSID du réseau WiFi concerné).

Dans une deuxième variante de réalisation, les étapes 210 à 216 sont remplacées par des étapes 217 à 221, pour la désactivation du module WiFi de la passerelle domestique 4. On suppose donc dans cette deuxième variante que ce module WiFi est dans l'état activé pour le réseau WiFi utilisé par le terminal de radiocommunication 2. En d'autres termes, ce dernier peut communiquer en WiFi avec la passerelle domestique 4.

Dans l'étape 217, le terminal de radiocommunication 2 transmet à la passerelle domestique 4, via le réseau WiFi précité, une requête de basculement (qui en l'espèce est une requête de désactivation). Avec cette requête est également transmis l'identifiant SSID du réseau WiFi concerné par cette requête.

Dans l'étape 218, la passerelle domestique 4 effectue le basculement pour le réseau WiFi concerné (c'est-à-dire désactive le module WiFi pour le réseau WiFi concerné). La passerelle domestique 4 modifie l'information de statut dans la table précitée (stockage d'un état courant pour chacun des réseaux WiFi gérés par la passerelle domestique).

Dans l'étape 219, la passerelle domestique 4 transmet l'information de statut au dispositif de configuration 3.

Dans une étape 220, le dispositif de configuration 3 retransmet l'information de statut au terminal de radiocommunication 2.

Dans une étape 221, le terminal de radiocommunication 2 restitue (par exemple en l'affichant sur son écran) l'information de statut à l'utilisateur 10.

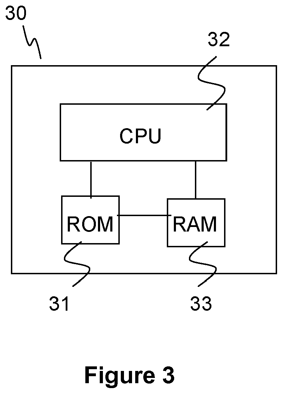

La **figure** 3 présente la structure d'un dispositif générique 30 qui, dans un mode de réalisation particulier de l'invention, est intégré dans chacune des entités suivantes des figures 1 et 2 (afin de leur permettre d'assumer leur rôle dans le séquencement du mécanisme complet) : le terminal de radiocommunication 2, le dispositif de configuration 3 et la passerelle domestique 4.

Le dispositif générique 30 comprend par exemple une mémoire RAM 33, une unité de traitement (ou CPU) 32, équipée par exemple d'un processeur et pilotée par un programme d'ordinateur stocké dans une mémoire ROM 31. A l'initialisation du dispositif générique 30, les instructions de code du programme d'ordinateur sont par exemple chargées dans la mémoire RAM 33 avant d'être exécutées par le processeur de l'unité de traitement 32. Le dispositif générique 30 se réalise indifféremment : sur une machine de calcul reprogrammable (ordinateur, processeur DSP ou microcontrôleur) exécutant un programme comprenant une séquence d'instructions; ou sur une machine de calcul dédiée, c'est-à-dire sous forme de matériel (par exemple un ensemble de portes logiques comme un FPGA ou un ASIC). Dans le cas d'une réalisation sur une machine de calcul reprogrammable, le programme correspondant (c'est-à-dire la séquence d'instructions) peut être stocké dans un médium de stockage amovible (tel que par exemple une disquette, un CD-ROM ou un DVD-ROM) ou non, ce médium de stockage étant lisible partiellement ou totalement par un ordinateur ou un processeur.

## Revendications

1. Procédé de déclenchement d'une fonction exécutable par une passerelle résidentielle, le procédé comprenant :
- une réception par un terminal de radiocommunication d'une information d'étiquette en provenance d'une radio-étiquette, l'information d'étiquette servant à identifier la fonction à déclencher;
le procédé étant **caractérisé en ce qu'**il comprend en outre, après ladite réception, les étapes successives suivantes:
- le terminal de radiocommunication transmet, via un réseau de radiocommunication, une requête de déclenchement de ladite fonction à un dispositif de configuration de la passerelle résidentielle;
- le dispositif de configuration propage via un réseau d'opérateur la requête de déclenchement jusqu'à la passerelle résidentielle;
- la passerelle résidentielle déclenche la fonction.

2. Procédé selon la revendication 1, dans lequel l'étape de transmission de la requête de déclenchement est effectuée seulement si le terminal de radiocommunication reçoit préalablement, via une première interface homme/machine manipulée par un utilisateur, un signal de validation.

3. Procédé selon la revendication 2, dans lequel l'étape de transmission de la requête de déclenchement par le terminal de radiocommunication est précédée des étapes suivantes :
- le terminal de radiocommunication transmet au dispositif de configuration une requête de statut de la fonction ;
- le dispositif de configuration propage la requête de statut jusqu'à la pas résidentielle;
- la passerelle résidentielle transmet au dispositif de configuration une information de statut, relative au statut de la fonction ;
- le dispositif de configuration propage l'information de statut jusqu'au terminal de radiocommunication ;
- le terminal de radiocommunication restitue l'information de statut audit utilisateur.

4. Procédé selon la revendication 1 dans lequel l'étape de transmission de la requête de déclenchement est effectuée automatiquement après réception par le terminal de radiocommunication de l'information d'étiquette.

5. Procédé selon l'une quelconque des revendications 1 à 4 dans lequel l'étape de déclenchement de la fonction par la passerelle résidentielle est suivie des étapes suivantes :
- la passerelle résidentielle transmet au dispositif de configuration une information de statut, relative au statut de la fonction ;
- le dispositif de configuration propage l'information de statut jusqu'au terminal de radiocommunication ;
- le terminal de radiocommunication restitue l'information de statut audit utilisateur, via une deuxième interface homme/machine.

6. Procédé selon l'une quelconque des revendications 1 à 5, dans lequel la fonction est une fonction d'activation ou de désactivation d'au moins un module de la passerelle résidentielle.

7. Procédé selon la revendication 6 lorsqu'elle dépend de la revendication 3, dans lequel ladite information de statut indique si le module est activé ou désactivé.

8. Procédé selon la revendication 6, dans lequel ledit au moins un module comprend une interface d'accès à un réseau local géré par la passerelle résidentielle, l'information d'étiquette comprend un identifiant d'au moins un réseau local géré par la passerelle résidentielle, la requête de déclenchement comprend ou est transmise avec ledit identifiant, et la passerelle résidentielle déclenche la fonction d'activation ou de désactivation de l'interface d'accès au réseau local identifié par ledit identifiant.

9. Procédé selon l'une quelconque des revendications 1 à 8, dans lequel l'identifiant du terminal de radiocommunication est transmis avec la requête de déclenchement, l'étape de propagation de la requête de déclenchement par le dispositif de configuration est précédée de l'étape suivante :
- le dispositif de configuration vérifie que l'identifiant du terminal de radiocommunication fait partie d'une liste prédéterminée d'identifiants autorisés ;
et l'étape de propagation de la requête de déclenchement par le dispositif de configuration est effectuée seulement si l'identifiant du terminal de radiocommunication est un identifiant autorisé.

10. Procédé selon l'une quelconque des revendications 1 à 9, dans lequel l'information d'étiquette est transmise avec la requête de déclenchement, l'étape de propagation de la requête de déclenchement par le dispositif de configuration est précédée de l'étape suivante :
- le dispositif de configuration vérifie que l'information d'étiquette fait partie d'une liste prédéterminée d'informations autorisées ;
et l'étape de propagation de la requête de déclenchement par le dispositif de configuration est effectuée seulement si l'information d'étiquette est une information autorisée.

11. Procédé selon l'une quelconque des revendications 1 à 10, dans lequel la fonction appartient au groupe comprenant :
- une fonction de point d'accès à au moins un réseau local sans fil,
- une fonction liée à un service de téléphonie ; et
- une fonction liée à un service de télévision.

12. Produit programme d'ordinateur, comprenant des instructions de code de programme pour la mise en oeuvre du procédé selon au moins une des revendications 1 à 11, lorsque ledit programme est exécuté, de manière distribuée, sur des ordinateurs ou des processeurs compris dans le terminal de radiocommunication, le dispositif de configuration et la passerelle résidentielle.

13. Médium de stockage lisible par ordinateur et non transitoire, stockant un programme d'ordinateur comprenant un jeu d'instructions exécutables, de manière distribuée, sur des ordinateurs ou des processeurs compris dans le terminal de radiocommunication, le dispositif de configuration et la passerelle résidentielle, pour mettre en oeuvre le procédé selon au moins une des revendications 1 à 11.

14. Système de déclenchement d'une fonction exécutable par une passerelle résidentielle, le système comprenant :
- une radio-étiquette ;
- un terminal de radiocommunication comprenant :
* des moyens de réception d'une information d'étiquette en provenance de ladite radio-étiquette, l'information d'étiquette servant à identifier la fonction à déclencher ;
ledit système étant **caractérisé en ce que**:
le terminal de radiocommunication comprend en outre:
* des moyens de transmission, via un réseau de radiocommunication, d'une requête de déclenchement de ladite fonction à un dispositif de configuration de la passerelle résidentielle; et **en ce que** le système comprend en outre ledit dispositif de configuration, ledit dispositif de configuration comprenant des moyens de propagation, via une réseau d'opérateur, de la requête de déclenchement jusqu'à la passerelle résidentielle; ladite passerelle résidentielle comprenant des moyens de déclenchement de la fonction.

## Patentansprüche

1. Auslöseverfahren einer durch eine lokale Schnittstelle ausführbaren Funktion, wobei das Verfahren umfasst:
- einen Empfang einer Etiketteninformation von einem Funketikett durch ein Funkkommunikationsendgerät, wobei die Etiketteninformation dazu dient, die auszulösende Funktion zu erkennen;
wobei das Verfahren **dadurch gekennzeichnet ist, dass** es außerdem nach dem Empfang die folgenden aufeinanderfolgenden Schritte umfasst:
- das Funkkommunikationsendgerät übermittelt über ein Funkkommunikationsnetz eine Anfrage zur Auslösung der Funktion an eine Konfigurationsvorrichtung der lokalen Schnittstelle;
- die Konfigurationsvorrichtung leitet über ein Betreibernetzwerk die Auslöseanfrage an die lokale Schnittstelle weiter;
- die lokale Schnittstelle löst die Funktion aus.

2. Verfahren nach Anspruch 1, bei dem der Schritt der Übermittlung der Auslöseanfrage nur durchgeführt wird, wenn das Funkkommunikationsendgerät zuvor über eine vom Benutzer bediente erste Mensch-Maschine-Schnittstelle ein Bestätigungssignal empfängt.

3. Verfahren nach Anspruch 2, bei dem dem Schritt der Übermittlung der Auslöseanfrage durch das Funkkommunikationsendgerät die folgenden Schritte vorausgehen:
- das Funkkommunikationsendgerät übermittelt der Konfigurationsvorrichtung eine Funktionsstatusanfrage;
- die Konfigurationsvorrichtung leitet die Statusanfrage an die lokale Schnittstelle weiter;
- die lokale Schnittstelle übermittelt eine Statusinformation zum Funktionsstatus an die Konfigurationsvorrichtung;
- die Konfigurationsvorrichtung leitet die Statusinformation an das Funkkommunikationsendgerät weiter;
- das Funkkommunikationsendgerät gibt die Statusinformation an den Benutzer aus.

4. Verfahren nach Anspruch 1, bei dem der Schritt der Übermittlung der Auslöseanfrage automatisch nach Empfang der Etiketteninformation durch das Funkkommunikationsendgerät ausgelöst wird.

5. Verfahren nach einem der Ansprüche 1 bis 4, bei dem der Schritt der Funktionsauslösung durch die lokale Schnittstelle von den folgenden Schritten gefolgt wird:
- die lokale Schnittstelle übermittelt der Konfigurationsvorrichtung eine Statusinformation zum Funktionsstatus;
- die Konfigurationsvorrichtung leitet die Statusinformation an das Funkkommunikationsendgerät weiter;
- das Funkkommunikationsendgerät gibt die Statusinformation über eine zweite Mensch-Maschine-Schnittstelle an den Benutzer aus.

6. Verfahren nach einem der Ansprüche 1 bis 5, bei dem die Funktion eine Funktion der Aktivierung oder Deaktivierung mindestens eines Moduls der lokalen Schnittstelle ist.

7. Verfahren nach Anspruch 6, wenn er von Anspruch 3 abhängt, bei dem die Statusinformation angibt, ob das Modul aktiviert oder deaktiviert ist.

8. Verfahren nach Anspruch 6, bei dem das mindestens eine Modul eine Zugangsschnittstelle zu einem lokalen Netzwerk umfasst, das durch die lokale Schnittstelle verwaltet wird, die Etiketteninformation eine Kennung mindestens eines lokalen Netzwerks umfasst, das von der lokalen Schnittstelle verwaltet wird, die Auslöseanfrage die Kennung umfasst oder mit dieser übermittelt wird und die lokale Schnittstelle die Funktion der Aktivierung oder Deaktivierung der Zugangsschnittstelle zum lokalen Netzwerk auslöst, das durch die Kennung bezeichnet ist.

9. Verfahren nach einem der Ansprüche 1 bis 8, bei dem die Kennung des Funkkommunikationsendgeräts mit der Auslöseanfrage übermittelt wird, dem Schritt der Weiterleitung der Auslöseanfrage durch die Konfigurationsvorrichtung der folgende Schritt vorausgeht:
- die Konfigurationsvorrichtung überprüft, ob die Kennung des Funkkommunikationsendgeräts Teil einer vorbestimmten Liste mit autorisierten Kennungen ist;
und der Schritt der Weiterleitung der Auslöseanfrage durch die Konfigurationsvorrichtung nur durchgeführt wird, wenn die Kennung des Funkkommunikationsendgeräts eine autorisierte Kennung ist.

10. Verfahren nach einem der Ansprüche 1 bis 9, bei dem die Etiketteninformation mit der Auslöseanfrage übermittelt wird, dem Schritt der Weiterleitung der Auslöseanfrage durch die Konfigurationsvorrichtung der folgende Schritt vorausgeht:
- die Konfigurationsvorrichtung überprüft, ob die Etiketteninformation Teil einer vorbestimmten Liste mit autorisierten Informationen ist;
und der Schritt der Weiterleitung der Auslöseanfrage durch die Konfigurationsvorrichtung nur durchgeführt wird, wenn die Etiketteninformation eine autorisierte Information ist.

11. Verfahren nach einem der Ansprüche 1 bis 10, bei dem die Funktion zu der Gruppe gehört, die umfasst:
- eine Funktion als Zugangspunkt zu mindestens einem drahtlosen lokalen Netzwerk,
- eine Funktion, die mit einem Telefoniedienst verbunden ist; und
- eine Funktion, die mit einem Fernsehdienst verbunden ist.

12. Computerprogrammprodukt, umfassend Programmcodeanweisungen zur Durchführung des Verfahrens nach mindestens einem der Ansprüche 1 bis 11, wenn das Programm auf Computern oder Prozessoren, die in dem Funkkommunikationsendgerät, der Konfigurationsvorrichtung und der lokalen Schnittstelle enthalten sind, verteilt ausgeführt wird.

13. Speichermedium, das computerlesbar und nichttransitorisch ist und ein Computerprogramm speichert, das einen Satz Anweisungen umfasst, der auf Computern oder Prozessoren, die in dem Funkkommunikationsendgerät, der Konfigurationsvorrichtung und der lokalen Schnittstelle enthalten sind, zur Durchführung des Verfahrens nach mindestens einem der Ansprüche 1 bis 11 verteilt ausgeführt wird.

14. System zur Auslösung einer durch eine Schnittstelle ausführbaren Funktion, wobei das System umfasst:
- ein Funketikett;
- ein Funkkommunikationsendgerät, umfassend:
* Mittel zum Empfang einer Etiketteninformation von dem Funketikett, wobei die Etiketteninformation dazu dient, die auszulösende Funktion zu bezeichnen;
wobei das System **dadurch gekennzeichnet ist, dass**:
das Endgerät außerdem umfasst:
* Mittel zur Übermittlung einer Anfrage zur Auslösung der Funktion an eine Konfigurationsvorrichtung der lokalen Schnittstelle über ein Funkkommunikationsnetz;
und dadurch, dass das System außerdem die Konfigurationsvorrichtung umfasst, wobei die Konfigurationsvorrichtung Mittel zur Weiterleitung der Auslöseanfrage an die lokale Schnittstelle über ein Betreibernetz umfasst; wobei die lokale Schnittstelle Mittel zur Auslösung der Funktion umfasst.

## Claims

1. Method for triggering a function able to be executed by a home gateway, the method comprising:
- receipt, by a radiocommunication terminal, of an item of tag information originating from an RFID tag, the item of tag information being used to identify the function to be triggered;
the method being **characterized in that** it furthermore comprises, after said receipt, the following successive steps:
- the radiocommunication terminal transmits, via a radiocommunication network, a request to trigger said function to a device for configuring the home gateway;
- the configuration device propagates, via an operator network, the trigger request as far as the home gateway;
- the home gateway triggers the function.

2. Method according to Claim 1, wherein the step of transmitting the trigger request is performed only if the radiocommunication terminal receives beforehand, via a first human/machine interface manipulated by a user, a validation signal.

3. Method according to Claim 2, wherein the step of transmitting the trigger request, performed by the radiocommunication terminal, is preceded by the following steps:
- the radiocommunication terminal transmits a request for the status of the function to the configuration device;
- the configuration device propagates the status request as far as the home gateway;
- the home gateway transmits an item of status information, relating to the status of the function, to the configuration device;
- the configuration device propagates the item of status information as far as the radiocommunication terminal;
- the radiocommunication terminal relays the item of status information to said user.

4. Method according to Claim 1, wherein the step of transmitting the trigger request is performed automatically after receipt, by the radiocommunication terminal, of the item of tag information.

5. Method according to any one of Claims 1 to 4, wherein the step of triggering the function, performed by the home gateway, is followed by the following steps:
- the home gateway transmits an item of status information, relating to the status of the function, to the configuration device;
- the configuration device propagates the item of status information as far as the radiocommunication terminal;
- the radiocommunication terminal relays the item of status information to said user, via a second human/machine interface.

6. Method according to any one of Claims 1 to 5, wherein the function is a function of activating or deactivating at least one module of the home gateway.

7. Method according to Claim 6 when it is dependent on Claim 3, wherein said item of status information indicates whether the module is activated or deactivated.

8. Method according to Claim 6, wherein said at least one module comprises an interface for accessing a local area network managed by the home gateway, the item of tag information comprises an identifier of at least one local area network managed by the home gateway, the trigger request comprises or is transmitted with said identifier, and the home gateway triggers the function of activating or deactivating the interface for accessing the local area network identified by said identifier.

9. Method according to any one of Claims 1 to 8, wherein the identifier of the radiocommunication terminal is transmitted with the trigger request, and the step of propagating the trigger request, performed by the configuration device, is preceded by the following step:
- the configuration device verifies that the identifier of the radiocommunication terminal belongs to a predetermined list of authorized identifiers;
and the step of propagating the trigger request, performed by the configuration device, is performed only if the identifier of the radiocommunication terminal is an authorized identifier.

10. Method according to any one of Claims 1 to 9, wherein the item of tag information is transmitted with the trigger request, and the step of propagating the trigger request, performed by the configuration device, is preceded by the following step:
- the configuration device verifies that the item of tag information belongs to a predetermined list of authorized items of information;
and the step of propagating the trigger request, performed by the configuration device, is performed only if the item of tag information is an authorized item of information.

11. Method according to any one of Claims 1 to 10, wherein the function belongs to the group comprising:
- a function of an access point to at least one wireless local area network,
- a function linked to a telephony service; and
- a function linked to a television service.

12. Computer program product, comprising program code instructions for implementing the method according to at least one of Claims 1 to 11 when said program is executed, in a distributed manner, on computers or processors contained in the radiocommunication terminal, the configuration device and the home gateway.

13. Non-transitory computer-readable storage medium storing a computer program comprising a set of instructions that are able to be executed, in a distributed manner, on computers or processors contained in the radiocommunication terminal, the configuration device and the home gateway, in order to implement the method according to at least one of Claims 1 to 11.

14. System for triggering a function able to be executed by a home gateway, the system comprising:
- an RFID tag;
- a radiocommunication terminal comprising:
- means for receiving an item of tag information originating from said RFID tag, the item of tag information being used to identify the function to be triggered;
said system being **characterized in that**:
the radiocommunication terminal furthermore comprises:
- means for transmitting, via a radiocommunication network, a request to trigger said function to a device for configuring the home gateway;
and **in that** the system furthermore comprises said configuration device, said configuration device comprising means for propagating, via an operator network, the trigger request as far as the home gateway; said home gateway comprising means for triggering the function.
